(19) Europäisches Patentamt
European Patent Office
Office européen des brevets

(11) Veröffentlichungsnummer : **0 007 575**
**B1**

(12) **EUROPÄISCHE PATENTSCHRIFT**

(45) Veröffentlichungstag der Patentschrift : **23.12.81**

(51) Int. Cl.³ : **A 01 N 43/64**, A 01 N 43/56, A 01 N 43/50, A 01 N 43/36

(21) Anmeldenummer : **79102535.6**

(22) Anmeldetag : **18.07.79**

(54) **Herbizide Mittel auf der Basis von Acetaniliden und ihre Verwendung zur Bekämpfung unerwünschten Pflanzenwuchses.**

(30) Priorität : **21.07.78 DE 2832046**

(43) Veröffentlichungstag der Anmeldung : **06.02.80 (Patentblatt 80/03)**

(45) Bekanntmachung des Hinweises auf die Patenterteilung : **23.12.81 Patentblatt 81/51**

(84) Benannte Vertragsstaaten : **AT BE CH DE FR GB IT LU NL SE**

(56) Entgegenhaltungen :
**FR - A - 2 215 170**
**FR - A - 2 368 476**
**FR - A - 2 379 525**
**US - A - 3 547 620**

(73) Patentinhaber : **BASF Aktiengesellschaft**
**Carl-Bosch-Strasse 38**
**D-6700 Ludwigshafen (DE)**

(72) Erfinder : **Eicken, Karl, Dr. Chem.**
**Waldstrasse 63**
**D-6706 Wachenheim (DE)**
Erfinder : **Wuerzer, Bruno, Dr. Dipl. Landwirt**
**Wilhelm-Busch-Strasse**
**D-6703 Limburgerhof (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 007 575 B1**

Imprimerie Jouve, 17, rue du Louvre, 75001 Paris, France

# Herbizide Mittel auf der Basis von Acetaniliden und ihre Verwendung zur Bekämpfung unerwünschten Pflanzenwuchses

Die vorliegende Erfindung betrifft herbizide Mittel, die Mischungen aus Halogenacetaniliden enthalten, und Verfahren zur Bekämpfung unerwünschten Pflanzenwuchses mit diesen herbiziden Mitteln.

Es ist bekannt, daß Halogenacetanilide herbizid wirksam sind (DE-PS 1 014 380, US-PS 3 442 945, US-PS 3 547 620, DE-OS 23 28 340). Insbesondere Chloracetanilide mit unsubstituiertem Phenylring oder mit Alkylsubstituenten in 2- und 6-Stellung am Phenylring eignen sich zur Bekämpfung von unerwünschten Gräsern. So werden z.B. 2-Chlor-N-isopropyl-acetanilid als Herbizid in Mais, Kultursorghum, Sojabohnen und Küchenzwiebeln, 2-Chlor-2',6'-diäthyl-N-methoxymethyl-acetanilid als Herbizid in Mais, Soja und Raps und 2-Chlor-2'-äthyl-6'-methyl-N-(1'-methoxy-prop-2'-yl)-acetanilid als Herbizid in Mais, Soja, Zuckerrüben und anderen Kulturen eingesetzt.

Diese Chloracetanilide eignen sich vorwiegend zur Beseitigung von unerwünschten Gräsern aus den Familien Setaria, Digitaria, Eleusine und Echinochloa, Andere landwirtschaftlich wichtige Gräser, wie Alopecurus-, Bromus- und Brachiaria-Arten oder Sorghum halepense werden weniger gut bekämpft. Von den breitblättrigen (zweikeimblättrigen) Pflanzen werden lediglich Amaranthus und wenige andere Arten noch verhältnismäßig gut erfaßt.

Im Vergleich dazu haben die aus der DE-OS 26 48 008 bekannten Halogenacetanilide, die am Stickstoff einen über ein Ringstickstoffatom gebundenen, gegebenenfalls substituierten Azolylmethylrest, wie einen Pyrazol-1-yl-methyl-, Triazol-1-yl-methyl- oder Tetrazol-1-yl-methylrest, tragen, bei niedrigen Aufwandmengen neben einer ausgezeichneten herbiziden Wirkung gegen Gräser auch eine gute Wirkung gegen breitblättrige Arten.

Darüber hinaus ist aus der US-PS 3 442 945 und der DE-OS 23 28 340 bekannt, daß die dort beschriebenen Halogenacetanilide auch in Kombination mit anderen herbiziden Wirkstoffen, z.B. bestimmten anderen Acetaniliden, angewendet werden können; es finden sich dort jedoch keinerlei Angaben über Wirkungsrichtung und Wirkungsgrad dieser Kombinationen.

Es wurde nun gefunden, daß herbizide Mittel, die eine Mischung aus N-Azolylmethyl-halogenacetaniliden der Formel I

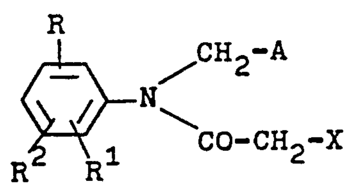

(I)

in der

R Wasserstoff, einen unverzweigten oder verzweigten Alkyl- oder Alkoxyrest mit bis zu 5 Kohlenstoffatomen,

$R^1$ Wasserstoff, Halogen, einen unverzweigten oder verzweigten Alkyl- oder Alkoxyrest mit bis zu 5 Kohlenstoffatomen,

$R^2$ Wasserstoff, Halogen, einen unverzweigten oder verzweigten Alkyl- oder Alkoxyrest mit bis zu 5 Kohlenstoffatomen,

R zusammen mit $R^2$ eine orthoständig verknüpfte, gegebenenfalls durch unverzweigte Alkylgruppen mit bis zu 4 Kohlenstoffatomen substituierte Alkylenkette mit bis zu 6 Kohlenstoffatomen,

X Chlor oder Brom und

A ein über ein Ringstickstoffatom gebundenes Azol, das einfach oder mehrfach durch Halogen, Phenyl, Alkyl-, Alkoxy-, Alkylthio- oder Perfluoralkylreste mit jeweils bis zu 4 Kohlenstoffatomen, Cyan, Carboxy, Carbalkoxy mit bis zu 4 Kohlenstoffatomen in der Alkoxygruppe oder Alkanoylreste mit bis zu 4 Kohlenstoffatomen substituiert sein kann, bedeutet, wobei A auch für Salze der 2 oder 3 Stickstoffatome enthaltenden Azole stehen kann,

und

substituierten Halogenacetaniliden der Formel II

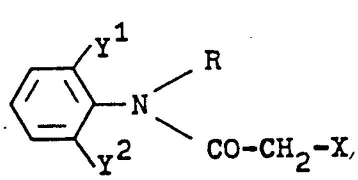

(II)

in der

R unverzweigtes oder verzweigtes Alkyl, Alkenyl oder Alkinyl mit jeweils bis zu 4 Kohlenstoffatomen oder den Rest —A—$R^1$ bedeutet, wobei A für einen Alkylenrest mit 1 oder 2 Kohlenstoffatomen, der

gegebenenfalls durch Äthyl einfach oder durch Methyl einfach oder zweifach substituiert sein kann, und $R^1$ für unverzweigtes oder verzweigtes Alkyloxy, Halogenalkyloxy, Alkenyloxy, Alkinyloxy oder Alkoxyalkyloxy mit jeweils bis zu 4 Kohlenstoffatomen, Cycloalkoxy oder Cycloalkylmethyloxy mit 3 bis 6 Kohlenstoffatomen im Cycloalkylring, 1,3-Dioxolan-2-yl oder Alkoxycarbonyl mit bis zu 4 Kohlenstoffatomen im Alkoxyrest stehen,

X Chlor oder Brom und

$Y^1$ und $Y^2$ gleich oder verschieden sind und Wasserstoff oder unverzweigtes oder verzweigtes Alkyl mit bis zu 4 Kohlenstoffatomen bedeuten, mit der Maßgabe, daß $Y^1$ und $Y^2$ nur für Wasserstoff stehen, wenn R unverzweigtes oder verzweigtes Alkyl, Alkenyl oder Alkinyl mit jeweils bis zu 4 Kohlenstoffatomen bedeutet, enthalten,

breiter und intensiver wirksam sind als herbizide Mittel, die lediglich ein Halogenacetanilid der Formel I oder der Formel II enthalten. Überraschenderweise zeigen die Halogenacetanilide der Formeln I und II in diesen Mischungen eine ausgeprägte synergistische Wirkung, insbesondere bei Aufwandmengen, bei denen eine oder beide Mischungskomponenten nur eine unzureichende Wirkung zeigen.

Als Mischungskomponenten der Formel I kommen N-Azolylmethyl-halogenacetanilide in Betracht, bei denen

R für Wasserstoff, Alkyl bis zu 5 Kohlenstoffatomen, wie Methyl, Äthyl, n-Propyl, i-Propyl, n-Butyl, sec.-Butyl, i-Butyl, tert.-Butyl, normale und verzweigte Pentylreste, Alkoxy mit bis zu 5 Kohlenstoffatomen, wie Methoxy, Äthoxy, Propoxy, Butoxy, Pentyloxy ;

$R^1$ und $R^2$ für Wasserstoff, Halogen, wie Fluor, Chlor, Brom oder Jod, Alkyl bis zu 5 Kohlenstoffatomen, wie Methyl, Äthyl, n-Propyl, i-Propyl, n-Butyl, sec.-Butyl, i-Butyl, tert.-Butyl, n-Pentyl und verzweigte Pentylreste, Alkoxy mit bis zu 5 Kohlenstoffatomen, wie Methoxy, Äthoxy, Propoxy, Butoxy, Pentyloxy ;

R zusammen mit $R^2$ für eine orthoständig verknüpfte, gegebenenfalls durch Alkyl mit bis zu 4 Kohlenstoffatomen substituierte Alkylenkette mit bis zu 6 Kohlenstoffatomen, wie Äthylen, Trimethylen, Tetramethylen, 1-Methyl-trimethylen, 1,1-Dimethyl-trimethylen, 1,1-Dimethyl-tetramethylen ;

X für Chlor oder Brom, vorzugsweise Chlor und

A für ein über ein Ring-Stickstoffatom gebundenes Azol, wie Pyrrol, Pyrazol, Imidazol, 1,2,4-Triazol, 1,2,3-Triazol, Tetrazol, das einfach oder mehrfach durch Halogen, Phenyl, Alkyl, Alkoxy-, Alkylthio- oder Perfluoralkylreste mit jeweils bis zu 4 Kohlenstoffatomen, Cyan, Carboxy, Carbalkoxyreste mit bis zu 4 Kohlenstoffatomen in der Alkoxygruppe oder Alkanoyl mit bis zu 4 Kohlenstoffatomen unabhängig voneinander substituiert sein kann, wie 2,6-Dimethylpyrrol, Tetramethylpyrrol, 3(5)-Methylpyrazol, 4-Methylpyrazol, 3(5)-Äthylpyrazol, 4-Äthylpyrazol, 3(5)-Isopropylpyrazol, 4-Isopropylpyrazol, 3,5-Dimethylpyrazol, 3,5-Dimethyl-4-acetylpyrazol, 3,5-Dimethyl-4-propionylpyrazol, 3,4,5-Trimethylpyrazol, 3(5)-Phenylpyrazol, 4-Phenylpyrazol, 3,5-Diphenylpyrazol, 3(5)-Phenyl-5(3)-methylpyrazol, 3(5)-Chlorpyrazol, 4-Chlorpyrazol, 4-Brompyrazol, 4-Jodpyrazol, 3,4,5-Trichlorpyrazol, 3,4,5-Tribrompyrazol, 3,5-Dimethyl-4-chlorpyrazol, 3,5-Dimethyl-4-brompyrazol, 4-Chlor-3(5)-methylpyrazol, 4-Brom-3(5)-methylpyrazol, 4-Methyl-3,5-dichlorpyrazol, 3(5)-Methyl-4,5(3)-dichlorpyrazol, 3(5)-Chlor-5(3)-methylpyrazol, 4-Methoxypyrazol, 3(5)-Methyl-5(3)-methoxypyrazol, 3(5)-Äthoxy-4,5(3)-dimethylpyrazol, 3(5)-Methyl-5(3)-trifluormethylpyrazol, 3,5-Bistrifluormethylpyrazol, 3(5)-Methyl-5(3)-carbäthoxypyrazol, 3,5-Biscarbäthoxypyrazol, 3,4,5-Triscarbäthoxy-pyrazol, 3(5)-Methyl-5(3)-methylthio-4-carbäthoxypyrazol, 4-Methyl-3,5-biscarbäthoxypyrazol, 4-Cyanopyrazol, 4-Methoxy-3,5-dichlorpyrazol, 4,5-Dichlor-imidazol, 2-Methyl-4,5-dichlor-imidazol, 2-Äthyl-4,5-dichlor-imidazol, 3(5)-Methyl-1,2,4-triazol, 3,5-Dimethyl-1,2,4-triazol, 3(5)-Chlor-1,2,4-triazol, 3(5)-Brom-1,2,4-triazol, 3(5)-Chlor-5(3)-methyl-1,2,4-triazol, 3,5-Dichlor-1,2,4-triazol, 3,5-Dibrom-1,2,4-triazol, 3(5)-Chloro-5(3)-cyano-1,2,4-triazol, 3(5)-Chlor-5(3)-phenyl-1,2,4-triazol, 3(5)-Chlor-5(3)-carbomethoxy-1,2,4-triazol, 3(5)-Methylthio-1,2,4-triazol, 4(5)-Methyl-1,2,3-triazol, 4,5-Dimethyl-1,2,3-triazol, 4(5)-Phenyl-1,2,3-triazol, 4(5)-Chlor-1,2,3-triazol, 1,2,3-Triazol-4(5)-yl-carbonsäureäthylester, 1,2,3-Triazol-4,5-yl-dicarbonsäure-dimethylester, 5-Methyltetrazol, 5-Chlortetrazol, Tetrazolyl-5-carbonsäureäthylester, steht.

Darüber hinaus kann der Rest A, wenn das gegebenenfalls substituierte Azol 2 oder 3 Stickstoffatome enthält, auch salzartig an eine der üblichen starken anorganischen oder organischen Säuren, wie Chlorwasserstoffsäure, Bromwasserstoffsäure, Salpetersäure, Schwefelsäure, Tetrafluorborsäure, Fluorsulfonsäure, Ameisensäure, eine halogenierte Carbonsäure, z.B. Trichloressigsäure, eine Alkansulfonsäure, z.B. Methansulfonsäure, eine halogenierte Alkansulfonsäure, z.B. Trifluormethansulfonsäure, Perfluorhexansulfonsäure, eine Arylsulfonsäure, z.B. Dodecylbenzolsulfonsäure, gebunden sein.

Bevorzugt sind Acetanilide, die in 2- und 6-Stellung am Phenylring Methyl oder Äthyl und in 3-Stellung Wasserstoff, Methyl oder Äthyl tragen, wobei als Azole Pyrazol, Triazol oder Tetrazol, die jeweils durch niederes Alkyl, Alkoxy, Carbalkoxy, Cyan oder Halogen substituiert sein können, in Betracht kommen.

Insbesondere enthalten die erfindungsgemäßen herbiziden Mittel folgende N-Azolylmethyl-halogenacetanilide :

2-Chlor-2', 6'-dimethyl-N-(pyrazol-1-yl-methyl)-acetanilid, 2-Chlor-2'-methyl-6'-äthyl-N-(pyrazol-1-yl-methyl)-acetanilid, 2-Chlor-2', 6'-dimethyl-N-(4-methylpyrazol-1-yl-methyl)-acetanilid, 2-Chlor-2'-methyl-6'-äthyl-N-(4-methoxypyrazol-1-yl-methyl)-acetanilid, 2-Chlor-2'-methyl-6'-äthyl-N-(3(5)-methylpyrazol-1-yl)-acetanilid, 2-Chlor-2',6'-dimethyl-N-(3,5-dimethylpyrazol-1-yl-methyl)-acetanilid, 2-Chlor-2',6'-dimethyl-N-(1,2,4-triazol-1-yl-methyl)-acetanilid, 2-Chlor-2',6'-dimethyl-N-(4-chlorpyrazol-1-yl-methyl)-acetanilid, 2-Chlor-2',3',6'-trimethyl-N-(pyrazol-1-yl-methyl)-acetanilid, 2-Chlor-2'-methyl-6'-äthyl-N-(3,5-dimethyl-pyrazol-1-yl-methyl)-acetanilid, 2-Chlor-2',6'-diäthyl-N-(3,5-dimethyl-pyrazol-1-yl-methyl)-acetanilid, 2-Chlor-2',3',6'-trimethyl-N-(3,5-dimethyl-pyrazol-1-yl-methyl)-acetanilid, 2-Chlor-2',6'-diäthyl-N-(4-methylpyrazol-1-yl-methyl)-acetanilid, 2-Chlor-2'-methyl-6'-äthyl-N-(4-methylpyrazol-1-yl-methyl)-acetanilid, 2-Chlor-2',3',6'-trimethyl-N-(4-methylpyrazol-1-yl-methyl)-acetanilid, 2-Chlor-2',6'-dimethyl-N-(3-(5)-methylpyrazol-1-yl-methyl)-acetanilid, 2-Chlor-2',6'-diäthyl-N-(3-(5)-methylpyrazol-1-yl-methyl)-acetanilid, 2-Chlor-2',6'-dimethyl-N-(4-methoxypyrazol-1-yl-methyl)-acetanilid, 2-Chlor-2',6'-diäthyl-N-(pyrazol-1-yl-methyl)-acetanilid, 2-Chlor-2'-methyl-6'-äthyl-N-(1,2,4-triazol-1-yl-methyl)-acetanilid, 2-Chlor-2',6'-diäthyl-N-(1,2,4-triazol-1-yl-methyl)-acetanilid, 2-Chlor-2',3',6'-trimethyl-N-(1,2,4-triazol-1-yl-methyl)-acetanilid, 2-Brom-2',6'-dimethyl-N-(pyrazol-1-yl-methyl)-acetanilid und 2-Brom-2'-methyl-6'-äthyl-N-(pyrazol-1-yl-methyl)-acetanilid.

Die N-Azolylmethyl-halogenacetanilide der Formel I und ihre Herstellung sind Gegenstand der DE-OS 26 48 008 und der DE-OS 27 44 396.

Als Mischungskomponenten der Formel II kommen Halogenacetanilide in Betracht, bei denen R den Rest —A—$R^1$ bedeutet. So kann R für den Rest —$CH_2$—O—Z, wobei Z unverzweigtes oder verzweigtes Alkyl, Halogenalkyl, Alkenyl, Alkinyl oder Alkoxyalkyl mit jeweils bis zu 4 Kohlenstoffatomen bedeutet, beispielsweise 2-Chlor-2',6'-diäthyl-N-methoxymethyl-acetanilid, 2-Chlor-2',6'-diäthyl-N-butoxy-methyl-acetanilid, 2-Chlor-2',6'-dimethyl-N-isobutoxy-methyl-acetanilid, 2-Chlor-2',6'-dimethyl-N-isopropoxy-methyl-acetanilid, 2-Chlor-2'-methyl-6'-äthyl-N-äthoxy-methyl-acetanilid, 2-Chlor-2'-methyl-6'-tert. butyl-N-methoxy-methyl-acetanilid, 2-Chlor-2'-methyl-6'-tert. butyl-N-butoxy-methyl-acetanilid, 2-Brom-2'-methyl-6'-tert. butyl-N-methoxy-methyl-acetanilid, oder für den Rest —A—O—$R^2$ stehen, wobei A eine gegebenenfalls durch Äthyl einfach oder durch Methyl einfach oder zweifach substituierte Äthylenkette und $R^2$ einen unverzweigten oder verzweigten Alkylrest mit bis zu 3 Kohlenstoffatomen, einen unverzweigten oder verzweigten Alkenylrest mit 3 oder 4 Kohlenstoffatomen, Cycloalkyl oder Cycloalkylmethyl mit 3 bis 6 Kohlenstoffatomen im Cycloalkylring, insbesondere Cyclopropyl oder Cyclopropylmethyl, bedeuten, beispielsweise 2-Chlor-2'-äthyl-6'-methyl-N-(1-methoxy-prop-2-yl)-acetanilid, 2-Chlor-2',6'-dimethyl-N-(2-methoxy-äthyl)-acetanilid. Ebenso kommen Halogenacetanilide der Formel II in Betracht, bei denen R für einen unverzweigten oder verzweigten Alkyl-, Alkenyl- oder Alkinylrest mit jeweils bis zu 4 Kohlenstoffatomen, einen Alkoxycarbonylmethylrest mit bis zu 4 Kohlenstoffatomen im Alkoxyrest oder für den 1,3-Dioxolan-2-yl-methylrest steht, beispielsweise 2-Chlor-N-isopropyl-acetanilid, 2-Chlor-2',6'-diäthyl-N-(äthoxycarbonyl-methyl)-acetanilid, 2-Chlor-2',6'-dimethyl-N-(1,3-dioxolan-2-yl-methyl)-acetanilid, 2-Chlor-2',6'-diäthyl-N-(isopropoxycarbonyl-methyl)-acetanilid, 2-Chlor-2'-methyl-6'-äthyl-N-(isopropoxycarbonyl-methyl)-acetanilid, 2-Chlor-N-butin-1-yl-3-acetanilid, 2-Chlor-2'-methyl-6'-äthyl-N-propargyl-acetanilid.

Die Halogenacetanilide der Formel II und ihre Herstellung sind in der DE-PS 1 014 380, der DE-OS 23 28 340, der US-PS 3 442 945 und der US-PS 3 547 620 beschrieben.

Die Mischungsverhältnisse der Wirkstoffe in den herbiziden Mitteln können einen weiten Bereich umfassen. So sind Kombinationen verwendbar, die auf einen Gewichtsteil N-Azolylmethyl-halogenacetanilid der Formel I 0,5 bis 20 Gewichtsteile Halogenacetanilid der Formel II enthalten. Die Wahl des Mischungsverhältnisses hängt in erster Linie von dem zu bekämpfenden Unkraut-bzw. Ungrasspektrum, eventuell auch von Entwicklungsstadium der zu bekämpfenden Pflanzen, ab. Vorzugsweise liegt das Mischungsverhältnis von N-Azolylmethyl-halogenacetanilid der Formel I : Halogenacetanilid der Formel II zwischen 1 : 0,5 und 1 : 10 Gewichtsteile.

Die erforderliche Aufwandmenge an Wirkstoffmischung, die in den erfindungsgemäßen herbiziden Mitteln enthalten ist, ist abhängig von der Bodenart, der Zusammensetzung des Pflanzenbestandes und den klimatischen Verhältnissen des Einsatzortes. Im allgemeinen betragen die Aufwandmengen 0,1 bis 10, vorzugsweise 0,5 bis 5 kg Wirkstoffmischung/ha.

Als Kulturen, in denen die erfindungsgemäßen herbiziden Mittel angewendet werden können, kommen im wesentlichen diejenigen in Betracht, in denen die Einzelwirkstoffe eingesetzt werden können, beispielsweise Raps und andere Kohlgewächse, Erdnüsse, Baumwolle, Kartoffeln (Irish potatoes), Zuckerrüben und vorzugsweise Mais und Sojabohnen.

Die erfindungsgemäßen herbiziden Mittel werden beispielsweise in Form von direkt versprühbaren Lösungen, Pulvern, Suspensionen, auch hochprozentige wäßrige, ölige oder sonstige Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet. Die Anwendungsformen richten sich ganz nach den Verwendungszwecken; sie sollten in jedem Fall möglichst die feinste Verteilung der erfindungsgemäßen Wirkstoffmischungen gewährleisten.

Zur Herstellung von direkt versprühbaren Lösungen, Emulsionen, Pasten und Öldispersionen kommen Mineralölfraktionen von mittlerem bis hohem Siedepunkt wie Kerosin oder Dieselöl, ferner Kohlenteeröle, sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen in Betracht: Alkali-, Erdalkali-, Ammoniumsalze von Ligninsulfonsäure, Naphthalinsulfonsäuren, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfonierten Naphthalin und Naphthalinderivaten mit Formaldehyd, Kondensationsprodukte des Naphthalins bzw. der Naphthalinsulfonsäuren mit Phenol und Formaldehyd, Polyoxyäthylen-octylphenoläther, äthoxyliertes Isooctylphenol-, Octylphenol-, Nonylphenol, Alkylphenolpolyglykoläther, Tributylphenylpolyglykoläther, Alkalarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an festen Trägerstoffe hergestellt werden. Feste Trägerstoffe sind Mineralerden wie Silicagel, Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Formulierungen enthalten zwischen 0,1 und 95 Gew.% Wirkstoffmischung, vorzugsweise zwischen 0,5 und 90 Gew.%.

Beispiele für Formulierungen sind:

I. 20 Gewichtsteile einer Mischung aus einem Gewichtsteil 2-Chlor-2',6'-dimethyl-N-(pyrazol-1-yl-methyl)-acetanilid und 2 Gewichtsteilen 2-Chlor-2',6'-diäthyl-N-methoxymethyl-acetanilid werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid and 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

II. 20 Gewichtsteile einer Mischung aus einem Gewichtsteil 2-Chlor-2',6'-dimethyl-N-(pyrazol-1-yl-methyl)-acetanilid und 3 Gewichtsteilen 2-Chlor-2'-äthyl-6'-methyl-N-(i-methoxy-prop-2'-yl)-acetanilid werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingießen und feines Verteilen der Lösung von 100 000 Gewichtsteilen Wasser erhält man eine wäßrige Dispersion, die 0,02 Gew.% des Wirkstoffs enthält.

III. 3 Gewichtsteile einer Mischung aus einem Gewichtsteil 2-Chlor-2',6'-dimethyl-N-(pyrazol-1-yl-methyl)-acetanilid und 2 Gewichtsteilen 2-Chlor-N-isopropyl-acetanilid werden mit 97 Gewichtsteilen feinteiligem Kaolin innig vermischt. Man erhält auf diese Weise ein Stäubemittel, das 3 Gew.% des Wirkstoffs enthält.

IV. 20 Teile einer Mischung aus einem Gewichtsteil 2-Chlor-2',6'-dimethyl-N-(pyrazol-1-yl-methyl)-acetanilid und 5 Gewichtsteilen 2-Chlor-2',6'-dimethyl-N-(1,3-dioxolan-2-yl-methyl)-acetanilid werden mit 2 Teilen Calciumsalz der Dodecylbenzolsufonsäure, 8 Teilen Fettalkohol-polyglykoläther, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

V. 30 Gewichtsteile einer Mischung aus einem Gewichtsteil 2-Chlor-2',6'-dimethyl-N-(pyrazol-1-yl-methyl)-acetanilid und 2 Gewichtsteilen 2-Chlor-2',6'-diäthyl-N-(äthoxycarbonyl-methyl)-acetanilid werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Die erfindungsgemäßen herbiziden Mittel können mit zahlreichen Vertretern anderer herbizider oder

wachstumsregulierender Wirkstoffgruppen gemischt und gemeinsam ausgebracht werden. Beispielsweise kommen als Mischungskomponenten Diazine, wie 1-Phenyl-4-amino-5-brom-pyridazon-(6), Benzothiadiazinone, wie 3-Isopropyl-2,1,3-benzothiadiazinon-(4)-2,2-dioxid, 2,6-Dinitroaniline, wie N-(1-Ethyl-n-propyl)-2,6-dinitro-3,4-xylidin, N-Phenyl-carbamate, wie N-Phenyl-carbaminsäureisopropylester, Thiolcarbamate, wie N,N-Diisopropylthiolcarbaminsäure-2,3,3-trichlorallylester, Halogencarbonsäuren, wie das Natriumsalz der 1,1-Dichlor-propionsäure, Triazine, wie 2-Chlor-4-ethylamino-6-isopropylamino-1,3,5-triazin, (4-Chlor-6-ethylamino-5-triazin-2-ylamino)-2-methylpropionitril, Amide, wie N,N-Dimethyl-2,2-diphenyl-acetamid, Harnstoffe, wie N-(3,4-Dichlorphenyl)-N'-methyl-N'-methoxyharnstoff, Diphenyläther, wie 2,4'-Dinitro-4-trifluormethyldiphenyläther, Triazinone, wie 4-Amino-6-tert. butyl-3-methylthio-4,5-dihydro-1,2,4-triazin-5-on, Uracile, wie 3-Cyclohexyl-5,6-trimethylen-uracil, Benzofuranderivate, wie 2-Äthoxy-2,3-dihydro-3,3-dimethyl-5-benzofuranyl-methansulfonat, und andere in Betracht. Solche Kombinationen dienen zur Verbreiterung des Wirkungsspektrums.

Außerdem ist es nützlich, die neuen erfindungsgemäßen Mischungen außer in Kombination mit anderen Herbiziden auch noch mit weiteren Pflanzenschutzmitteln gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralstofflösungen, welche zur Behebung von Ernährungs- oder Spurenelementmängeln eingesetzt werden.

Durch die folgenden Gewächshaus- und Freilandversuche wird die durch die kombinierte Anwendung von Halogenacetaniliden der Formeln I und II in den erfindungsgemäßen herbiziden Mitteln erzielte synergistische Wirkungssteigerung belegt.

I. Gewächshausversuche

Als Kulturgefäße dienten Plastikblumentöpfe mit 300 $cm^3$ Inhalt und lehmigem Sand mit etwa 1,5 % Humus als Substrat. Die Samen der Testpflanzen entsprechend Tabelle 1 wurden nach Arten getrennt flach eingesät. Unmittelbar danach erfolgte bei Vorauflaufbehandlung das Aufbringen der Wirkstoffe auf die Erdoberfläche. Die Einzelwirkstoffe und die Mischungen davon wurden hierbei in Wasser als Verteilungsmittel suspendiert oder emulgiert und mittels fein verteilender Düsen gespritzt. Nach dem Aufbringen der Mittel wurden die Gefäße leicht beregnet, um Keimung und Wachstum in Gang zu bringen und auch gleichzeitig die chemischen Wirkstoffe zu aktivieren. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die chemischen Wirkstoffe beeinträchtigt wurde. Die Aufstellung der Versuche erfolgte im Gewächshaus, wobei für wärmeliebende Arten heißere Bereiche von 25 bis 40 °C und für solche gemäßigter Klimate 15 bis 30 °C bevorzugt wurden. Die Versuchsperiode erstreckte sich über 4 bis 6 Wochen. Während dieser Zeit wurden die Pflanzen gepflegt und ihre Reaktion auf die einzelnen Behandlungen wurde ausgewertet.

II. Freilandversuche

Es handelt sich um Kleinparzellenversuche auf Standorten mit lehmigem Sand von pH 6 und 1 bis 1,5 % Humusgehalt. Es werden Vorauflaufanwendungen beschrieben, welche unmittelbar bis spätestens 3 Tage nach der Saat erfolgten. Die Kulturpflanzen wurden jeweils in Reihen gesät. Die Unkrautflora verschiedenster Artenzusammensetzung war natürlich vorkommend. Die Substanzen wurden, in Wasser als Träger- und Verteilermedium emulgiert oder suspendiert, mit Hilfe einer motorgetriebenen, auf einen Geräteträger montierten Parzellenspritze ausgebracht. Bei Fehlen natürlicher Niederschläge wurde künstlich beregnet, um Keimung und Wachstum von Nutzpflanzen und Unkräutern zu gewährleisten. Alle Versuche liefen über mehrere Wochen. In diesem Zeitraum wurde in gewissen Abständen die Bewertung vorgenommen.

Die folgenden Tabellen enthalten die Prüfsubstanzen, die jeweiligen Dosierungen in kg/ha Aktivsubstanz und die Testpflanzenarten. Bewertet wird nach einer Skala von 0 bis 100. Dabei bedeutet 0 keine Schädigung oder normaler Auflauf und 100 kein Aufgang der Pflanzen bzw. völlige Zerstörung zumindest der oberirdischen Sproßteile.

Folgende Wirkstoffe wurden verwendet :

2-Chlor-2',6'-dimethyl-N-(pyrazol-1-yl-methyl)-acetanilid (Wirkstoff A),

2-Chlor-2',6'-diäthyl-N-(methoxy-methyl)-acetanilid (Wirkstoff B),

2-Chlor-2'-äthyl-6'-methyl-N-(1'-methoxy-prop-2'-yl)-acetanilid (Wirkstoff C),

2-Chlor-N-isopropylacetanilid (Wirkstoff D).

Zur rechnerischen Prüfung der Mischungen auf synergistische Wirkung wurde zunächst die Wirkung der Einzelverbindungen in abgestuften Aufwandmengen festgestellt (Dosis-Wirkungsreihen). Daraus wurden nach der von F.H.A. Rummens in Weed Science *23*, 4 ff (1975) vorgeschlagenen Methode die theoretisch zu erwartende Wirkung, welche sich aus der Mischung zweier Partner mit vorgegebener Einzelwirkung ergeben könnte, errechnet. Diese errechneten Werte wurden mit den tatsächlich in den Versuchen festgestellten Ergebnissen der Mischungen verglichen. Sind die gefundenen Schädigungsgrade größer als die berechneten, so liegt eine synergistische Wirkung vor.

Ergebnis

Die Tabellen 2, 3 und 4 zeigen, daß die tatsächlich gefundenen Schädigungsgrade der unerwünschten Pflanzen über den theoretisch zu erwartenden liegen. Somit zeigt sich die synergistische Wirkung dieser Wirkstoffkombinationen bei unerwünschten Gräsern und breitblättrigen Arten, die weit über die reine additive Wirkung der Einzelwirkstoffe hinausgeht. Insbesondere die Freilandergebnisse zeigen, daß die erfindungsgemäßen Mischungen für eine praktische Anwendung zur selektiven Bekämpfung von unerwünschten Pflanzen in Kulturpflanzen geeignet sind.

Tabelle 1 - Liste der Pflanzennamen

| Botanische Bezeichnung | Deutsche Bezeichnung | Englische Bezeichnung |
|---|---|---|
| Alopecurus myosuroides | Ackerfuchsschwanz | slender foxtail |
| Chenopodium album | Weißer Gänsefuß | lambsquaters (goosefoot) |
| Sorghum halepense | Sudangras (Wilde Mohrenhirse) | Johnsongrass |
| Stellaria media | Vogelsternmiere | chickweed |
| Zea mays | Mais | Indian corn |

Tabelle 2 - Synergistische herbizide Wirkung von Mischungen aus Wirkstoff A und B bei Vorauflaufanwendung im Gewächshaus

| Mischungen | Aufwandmenge kg/ha a.S. | Testpflanzen mit theoretischer und tatsächlicher Schädigung | | | | | |
|---|---|---|---|---|---|---|---|
| | | Sorghum halepense Schädigung [%] | | Stellaria media Schädigung [%] | | Alopecurus myosu-roides Schädigung [%] | |
| | | err. | festg. | err. | festg. | err. | festg. |
| A + B | 0,125 + 0,25 | — | — | 52 | 96 | 44 | 100 |
| A + B | 0,125 + 0,375 | 30 | 95 | 64 | 98 | 53 | 100 |
| A + B | 0,25 + 0,5 | 65 | 100 | 91 | 99 | 78 | 100 |
| A + B | 0,25 + 0,75 | 74 | 100 | 93 | 99 | 83 | 100 |

Tabelle 3 - Synergistische herbizide Wirkung von Mischungen aus Wirkstoff A und C bei Vorauflaufanwendung im Gewächshaus

| Mischungen | Aufwandmenge kg/ha a.S. | Testpflanzen mit theoretischer und tatsächlicher Schädigung | | | | | |
|---|---|---|---|---|---|---|---|
| | | Sorghum halepense Schädigung [%] | | Stellaria media Schädigung [%] | | Alopecurus myosu-roides Schädigung [%] | |
| | | err. | festg. | err. | festg. | err. | festg. |
| A + C | 0,06 + 0,18 | 43 | 96 | 13 | 91 | 56 | 100 |
| | 0,125 + 0,25 | 89 | 96 | 51 | 98 | 81 | 100 |
| | 0,125 + 0,375 | 94 | 100 | 66 | 96 | 84 | 100 |

Tabelle 4 - Bekämpfung von Chenopodium album durch synergistische Mischungen bei Vorauflaufanwendung im Freiland

| Verbindungen | Aufwandmenge kg/ha a.S. | Testpflanzen mit theoretischer und tatsächlicher Schädigung | | |
|---|---|---|---|---|
| | | Chenopodium album Schädigung [%] | | Kulturpflanze Zea mays Schädigung [%] |
| | | errechnet | festgestellt | festgestellt |
| A + B | 0,125 + 1,5 | 67 | 85 | 0 |
| | 0,25 + 1,5 | 76 | 88 | 0 |
| | 0,5 + 1,5 | 89 | 95 | 0 |
| | 0,5 + 0,5 | 71 | 98 | 0 |
| A + C | 0,25 + 1,5 | 40 | 75 | 0 |
| | 0,5 + 1,5 | 52 | 90 | 0 |
| | 0,25 + 2,0 | 50 | 82 | 0 |
| | 0,5 + 2,0 | 61 | 95 | 2,5 |
| | 0,75 + 0,75 | 58 | 92 | 2,5 |
| A + D | 0,25 + 2,0 | 40 | 75 | 0 |
| | 0,5 + 2,0 | 48 | 88 | 2,5 |

**Ansprüche**

1. Herbizide Mittel, enthaltend eine Mischung aus einem N-Azolylmethylhalogenacetanilid der Formel

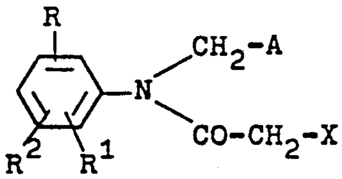

(I)

In der

R Wasserstoff, einen unverzweigten oder verzweigten Alkyl- oder Alkoxyrest mit bis zu 5 Kohlenstoffatomen,

$R^1$ Wasserstoff, Halogen, einen unverzweigten oder verzweigten Alkyl- oder Alkoxyrest mit bis zu 5 Kohlenstoffatomen,

$R^2$ Wasserstoff, Halogen, einen unverzweigten oder verzweigten Alkyl- oder Alkoxyrest mit bis zu 5 Kohlenstoffatomen,

R zusammen mit $R^2$ eine orthoständig verknüpfte, gegebenenfalls durch unverzweigte Alkylgruppen mit bis zu 4 Kolhlenstoffatomen substituierte Alkylenkette mit bis zu 6 Kohlenstoffatomen,

X Chlor oder Brom und

A ein über ein Ringstickstoffatom gebundenes Azol, das einfach oder mehrfach durch Halogen, Phenyl, Alkyl-, Alkoxy-, Alkylthio- oder Perfluoralkylreste mit jeweils bis zu 4 Kohlenstoffatomen, Cyan, Carboxy, Carbalkoxy mit bis zu 4 Kohlenstoffatomen in der Alkoxygruppe oder Alkanoylreste mit bis zu 4 Kohlenstoffatomen substituiert sein kann, bedeutet, wobei A auch für Säureadditionssalze von denjenigen Azolen stehen kann, die 2 oder 3 Stickstoffatome enthalten,

und

einem Halogenacetanilid der Formel II

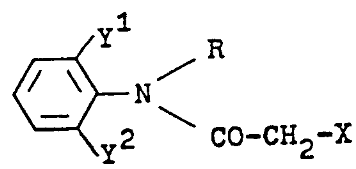

(II)

in der

R unverzweigtes oder verzweigtes Alkyl, Alkenyl oder Alkinyl mit jeweils bis zu 4 Kohlenstoffatomen oder den Rest —A—$R^1$ bedeutet, wobei A für einen Alkylenrest mit 1 oder 2 Kohlenstoffatomen, der gegebenenfalls durch Äthyl einfach oder durch Methyl einfach oder zweifach substituiert sein kann, und $R^1$ für unverzweigtes oder verzweigtes Alkyloxy, Halogenalkyloxy, Alkenyloxy, Alkinyloxy oder Alkoxyalkyloxy mit jeweils bis zu 4 Kohlenstoffatomen, Cycloalkyloxy oder Cycloalkylmethyloxy mit 3 bis 6 Kohlenstoffatomen im Cycloalkylring, 1,3-Dioxolan-2-yl oder Alkoxycarbonyl mit bis zu 4 Kohlenstoffatomen im Alkoxyrest stehen,

X Chlor oder Brom und

$Y^1$ und $Y^2$ gleich oder verschieden sind und Wasserstoff oder unverzweigtes oder verzweigtes Alkyl mit bis zu 4 Kohlenstoffatomen bedeuten, mit der Maßgabe, daß $Y^1$ und $Y^2$ nur für Wasserstoff stehen, wenn R unverzweigtes oder verzweigtes Alkyl, Alkenyl oder Alkinyl mit jeweils bis zu 4 Kohlenstoffatomen bedeutet.

2. Herbizide Mittel nach Anspruch 1, dadurch gekennzeichnet, daß sie als N-Azolylmethylhalogenacetanilid der Formel I 2-Chlor-2',6'-dimethyl-N-(pyrazol-1-yl-methyl)-acetanilid enthalten.

3. Herbizide Mittel nach Anspruch 1, dadurch gekennzeichnet, daß sie als Halogenacetanilid der Formel II 2-Chlor-2',6'-diäthyl-N-methoxymethyl-acetanilid enthalten.

4. Herbizide Mittel nach Anspruch 1, dadurch gekennzeichnet, daß sie als Halogenacetanilid der Formel II 2-Chlor-2'-äthyl-6'-methyl-N-(1'-methoxy-prop-2'-yl)-acetanilid enthalten.

5. Herbizide mittel nach Anspruch 1, dadurch gekennzeichnet, daß sie als Halogenacetanilid der Formel II 2-Chlor-N-isopropyl-acetanilid enthalten.

6. Herbizide Mittel gemäß Anspruch 1, dadurch gekennzeichnet, daß das Mischungsverhältnis N-Azolylmethylhalogenacetanilid der Formel I : Halogenacetanilid der Formel II 1 : 0,5 bis 1 : 20 Gewichtsteile beträgt.

7. Verfahren zur Bekämpfung unerwünschten Pflanzenwuchses, dadurch gekennzeichnet, daß man die Pflanzen mit einem herbiziden Mittel gemäß Anspruch 1 behandelt.

## Claims

1. Herbicidal agents containing a mixture of an N-azolylmethyl-haloacetanilide of the formula I

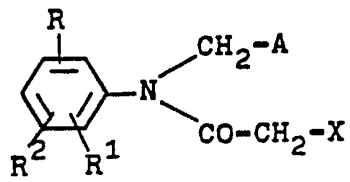

(I)

where

R denotes hydrogen or linear or branched alkyl or alkoxy of up to 5 carbon atoms,

$R^1$ denotes hydrogen, halogen, or linear or branched alkyl or alkoxy of up to 5 carbon atoms,

$R^2$ denotes hydrogen, halogen, or linear or branched alkyl or alkoxy of up to 5 carbon atoms,

R together with $R^2$ forms an alkylene chain of up to 6 carbon atoms which is linked in the o-position and is unsubstituted or substituted by linear alkyl of up to 4 carbon atoms,

X denotes chlorine or bromine, and

A denotes an azole which is attached via a ring nitrogen atom and is unsubstituted or mono- or polysubstituted by halogen, phenyl, alkyl, alkoxy, alkylthio or perfluoralkyl, each of up to 4 carbon atoms, cyano, carboxy, carbalkoxy of up to 4 carbon atoms in the alkoxy, or alkanoyl of up to 4 carbon atoms, it being possible for A to also denote an acid addition salt of an azole containing 2 or 3 nitrogen atoms, and a haloacetanilide of the formula II

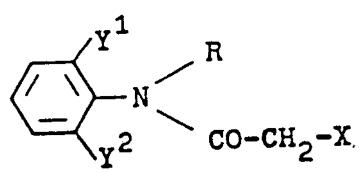

(II)

where

R denotes linear or branched alkyl, alkenyl or alkynyl, each of up to 4 carbon atoms, or —A—$R^1$, A denoting alkylene of 1 or 2 carbon atoms which may be monosubstituted by ethyl or mono- or disubstituted by methyl, and $R^1$ denoting linear or branched alkoxy, haloalkoxy, alkenoxy, alkynoxy or alkoxyalkoxy, each of up to 4 carbon atoms, cycloalkoxy or cycloalkylmethoxy with 3 to 6 carbon atoms in the cycloalkylring, 1.3-dioxolan-2-yl or alkoxycarbonyl of up to 4 carbon atoms in the alkoxy,

X denotes chlorine or bromine, and

$Y^1$ and $Y^2$ are identical or different and each denotes hydrogen or linear or branched alkyl of up to 4 carbon atoms, with the proviso that $Y^1$ and $Y^2$ only denote hydrogen when R is linear or branched alkyl, alkenyl or alkynyl, each of up to 4 carbon atoms.

2. Herbicidal agents as claimed in claim 1, characterized in that they contain 2-chloro-2',6'-dimethyl-N-(pyrazol-1-yl-methyl)-acetanilide as N-azolylmethylhaloacetanilide of the formula I.

3. Herbicidal agents as claimed in claim 1, characterized in that they contain 2-chloro-2',6'-diethyl-N-methoxymethylacetanilide as haloacetanilide of the formula II.

4. Herbicidal agents as claimed in claim 1, characterized in that they contain 2-chloro-2'-ethyl-6'-methyl-N-(1'-methoxy-prop-2'-yl)-acetanilide as haloacetanilide of the formula II.

5. Herbicidal agents as claimed in claim 1, characterized in that they contain 2-chloro-N-isopropylacetanilide as haloacetanilide of the formula II.

6. Herbicidal agents as claimed in claim 1, characterized in that the ratio of N-azolylmethylhaloacetanilide of the formula I to haloacetanilide of the formula II is from 1 : 0.5 to 1 : 20 parts by weight.

7. A process for combating the growth of unwanted plants, characterized in that the plants are treated with a herbicidal agent as claimed in claim 1.

**Revendications**

1. Herbicides, contenant un mélange d'un halogénacétanilide de N-azolylméthyle de formule I

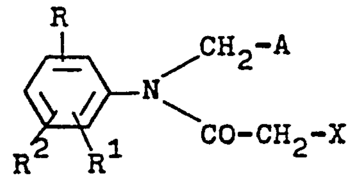

(I)

dans laquelle

R représente l'hydrogène, un reste alkyle ou alcoxy, non ramifié ou ramifié, ayant jusqu'à 5 atomes de carbone,

$R^1$ l'hydrogène, un halogène, un reste alkyle ou alcoxy ayant jusqu'à 5 atomes de carbone, non ramifié ou ramifié.

$R^2$ l'hydrogène, un halogène, un reste alkyle ou alcoxy ayant jusqu'à 5 atomes de carbone, non ramifié ou ramifié,

R avec $R^2$ une chaîne alkylène ayant jusqu'à 6 atomes de carbone, reliée en position ortho, éventuellement substituée par des groupes alkyle non ramifiés, ayant jusqu'à 4 atomes de carbone,

X chlore ou brome et

A un azole lié par l'intermédiaire d'un atome d'azote du noyau, et qui peut être substitué une ou plusieurs fois par un halogène, un phényle, des restes alkyle, alcoxy, alkylthio, ou perfluoralkyle ayant jusqu'à 4 atomes de carbone, cyano, carboxy, carbalkoxy ayant jusqu'à 4 atomes de carbone dans les groupes alkoxy, ou des restes alkanoyle ayant jusqu'à 4 atomes de carbone, A pouvant aussi représenter des sels d'addition d'acides de ceux des azoles qui contiennent 2 ou 3 atomes d'azote, et un halogénoacétanilide de formule II

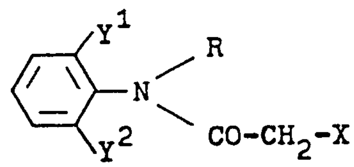

(II)

dans laquelle

R représente un alkyle, alcényle ou alcinyle, non ramifié ou ramifié, ayant jusqu'à 4 atomes de carbone ou le reste —A—$R^1$, A représentant un reste alkyle à 1 ou 2 atomes de carbone, qui peut éventuellement être substitué une fois par de l'éthyle ou une ou plusieurs fois par du méthyle, et $R^1$ représente alkyloxy, halogénalkyloxy, alcényloxy, alkinyloxy ou alkoxyalkyloxy, ramifiés ou non, ayant jusqu'à 4 atomes de carbone, cycloalkyloxy ou cycloalkylméthyloxy à 3 à 6 atomes de carbone dans le noyau cycloalkyle, 1,3-dioxolan-2-yle ou alkoxycarbonyle ayant jusqu'à 4 atomes de carbone dans le reste alkoxy,

X chlore ou brome et

$Y^1$ et $Y^2$ sont identiques ou différents et représentent l'hydrogène ou un alkyle, ramifié ou non, ayant jusqu'à 4 atomes de carbone, sous réserve que $Y^1$ et $Y^2$ représentent seulement hydrogène lorsque R représente alkyle, alcényle ou alkinyle, ramifiés ou non, ayant jusqu'à 4 atomes de carbone.

2. Herbicides selon la revendication 1, caractérisés par le fait qu'ils contiennent, comme halogénacétanilide de N-azolylméthyle de formule I, de l'acétanilide de 2-chloro-2',6'-diméthyl-N-(pyrazol-1-yl-méthyle).

3. Herbicides selon la revendication 1, caractérisés par le fait qu'ils contiennent, comme halogénacétanilide de formule II, de l'acétanilide de 2-chloro-2',6'-diéthyl-N-méthoxyméthyle.

4. Herbicides selon la revendication 1, caractérisés par le fait qu'ils contiennent, comme halogénacétanilide de formule II, de l'acétanilide de 2-chloro-2'-éthyl-6'-méthyl-N-(1'-méthoxy-prop-2'-yle).

5. Herbicides selon la revendication 1, caractérisés par le fait qu'ils contiennent, comme halogénacétanilide de formule II, de l'acétanilide de 2-chloro-N-isopropyle.

6. Herbicides selon la revendication 1, caractérisés par le fait que le rapport de mélange, halogénacétanilide de N-azolylméthyle de formule I/halogénacétanilide de formule II, est de 1/0,5 à 1/20 partie en poids.

7. Procédé de lutte contre la croissance indésirable des plantes, caractérisé par le fait que l'on traite les plantes avec un herbicide selon la revendication 1.